# EUROPEAN PATENT APPLICATION

(11) **EP 2 938 024 A1**
(43) Date of publication of application: **28.10.2015**
(21) Application number: 14792006.0
(22) Date of filing: 24.04.2014
(51) Int. Cl.: H04L 12/24, H04L 12/26

(54) **CONTROL METHOD AND EXECUTION METHOD FOR NETWORK TRANSACTION, NETWORK CONTROLLER AND FORWARDING DEVICE**

(30) Priority: 28.04.2013 CN 201310155850
(71) Applicant: Huawei Technologies Co., Ltd., Longgang District Shenzhen, Guangdong 518129 (CN)
(72) Inventor: ZHANG, Dacheng, Shenzhen Guangdong 518129 (CN); XIA, Yinben, Shenzhen Guangdong 518129 (CN)
(74) Representative: Epping - Hermann - Fischer
(86) International application number: PCT/CN2014/076129
(87) International publication number: WO 2014/177012

(57) **Abstract**

The present invention relates to the communications field, and discloses a network transaction control method and executing method, a network controller, and a forwarding device. The network transaction control method includes: sending, by a network controller, according to a network transaction, an operation set package including at least one operation instruction to at least two forwarding devices, where: the operation set package includes an atomic operation identifier; receiving an execution status message fed back by each forwarding device; and if it is determined, according to each execution status message, that an operation result of any operation instruction executed by any forwarding device is: execution failed, separately sending a rollback control instruction including the atomic operation identifier to each forwarding device for which no execution failure is determined, so as to instruct each forwarding device to restore to a state that is prior to execution of each operation instruction. By using the technical solution, when a network controller controls a forwarding device to execute a network transaction, a situation in which the network transaction is incompletely executed may be reduced, that is, a situation in which some devices successfully execute a network transaction and some devices fail to execute the network transaction may be reduced.

## Description

This application claims priority to Chinese Patent Application No. 201310155850.4, filed with the Chinese Patent Office on April 28, 2013 and entitled "NETWORK TRANSACTION CONTROL METHOD AND EXECUTING METHOD, NETWORK CONTROLLER, AND FORWARDING DEVICE", which is incorporated herein by reference in its entirety.

### TECHNICAL FIELD

The present invention relates to the communications field, and in particular, to a network transaction control method and executing method, a network controller, and a forwarding device.

### BACKGROUND

In a traditional forwarding device, a control function and a forwarding function are closely coupled into a closed system, which is adverse to functional extension of the forwarding device. With the development of network applications, an increasing number of services need to cooperate with multiple forwarding devices to improve service efficiency and meet a service requirement. Therefore, a new network architecture, namely, an architecture in which control and forwarding are separated, appears.

The architecture in which control and forwarding are separated is mainly formed by three layers, which are an application layer, a control layer, and a forwarding layer separately. The application layer includes application programs for various transactions. A user delivers a service operation command to the control layer by operating the application program, so as to execute a corresponding transaction. The control layer is mainly used to deliver a series of execution commands to one or more forwarding devices at the forwarding layer according to the delivered service operation command. The control layer is mainly implemented by using a network controller, where the network controller may be a single device, or may be a control system formed by multiple devices. After receiving the execution commands, the one or more forwarding devices at the forwarding layer execute corresponding operations according to the execution commands, so as to implement forwarding of data information.

In the prior art, a network transaction control method is specifically as follows: A network controller delivers a Barrier command to each forwarding device, and each forwarding device executes and validates, according to a sequence specified by the Barrier command, each operation instruction corresponding to a network transaction.

During a process of researching the present invention, the inventor finds that the prior art has at least the following problems:

The network transaction control method according to the prior art cannot ensure integrity of an entire network transaction. If a forwarding device fails to execute any one command, and the forwarding device has no corresponding operation, for a network transaction that needs to be executed by multiple forwarding devices, some forwarding devices successfully execute the network transaction and some forwarding devices fail to execute the network transaction, causing a local fault to occur in the entire network transaction.

### SUMMARY

A first objective of the embodiments of the present invention is to provide a network transaction control method. By using the technical solution, when a network controller controls a forwarding device to execute a network transaction, a situation in which the network transaction is incompletely executed may be reduced, that is, a situation in which some devices successfully execute the network transaction and some devices fail to execute the network transaction may be reduced.

A second objective of the embodiments of the present invention is to provide a network transaction executing method. By using the technical solution, when a network controller controls a forwarding device to execute a network transaction, a situation in which the network transaction is incompletely executed may be reduced, that is, a situation in which some devices successfully execute the network transaction and some devices fail to execute the network transaction may be reduced.

A third objective of the embodiments of the present invention is to provide a network controller. By using the technical solution, when a network controller controls a forwarding device to execute a network transaction, a situation in which the network transaction is incompletely executed may be reduced, that is, a situation in which some devices successfully execute the network transaction and some devices fail to execute the network transaction may be reduced.

A fourth objective of the embodiments of the present invention is to provide a forwarding device. By using the technical solution, when a network controller controls a forwarding device to execute a network transaction, a situation in which the network transaction is incompletely executed may be reduced, that is, a situation in which some devices successfully execute the network transaction and some devices fail to execute the network transaction may be reduced.

According to a first aspect, an embodiment of the present invention provides a network transaction control method, where the method is applied in a system in which control and forwarding are separated and includes:
sending, by a network controller, an operation set package including at least one operation instruction to at least two forwarding devices according to a network transaction, where:
   the operation set package includes : an atomic operation identifier used to uniquely identify the network transaction;
   receiving, by the network controller, an execution status message fed back by each of the forwarding devices, where the execution status message includes: the atomic operation identifier and an operation result of an operation instruction executed by a forwarding devices; and
   if the network controller determines, according to each of the execution status messages, that an operation result of any one of the operation instructions executed by any one of the forwarding devices is: execution failed,
   separately sending, by the network controller, a rollback control instruction including forwarding devices for which no execution failure has been determined, so as to instruct each of the forwarding devices for which no execution failure has been determined, to restore to a state that is prior to execution of each of the operation instructions in the operation set package.

With reference to the first aspect, in a first implementation manner of the first aspect, the determining, by the network controller according to each of the execution status messages, that the operation result of any one of the operation instructions executed by any one of the forwarding devices is: execution failed is specifically:
starting, by the network controller, a timer after sending the operation set package, and if no execution status message sent by one of the forwarding devices has been received when the timer expires, determining, by the network controller, that the operation result of the operation instruction executed by the forwarding device that has not fed back an execution status message is: execution failed; or
determining, by the network controller according to an execution failure status message carried in the execution status message, that the operation result of the operation instruction executed by the forwarding device that has fed back the execution status message is: execution failed.

With reference to the first aspect, in a second implementation manner of the first aspect, the method further includes: if the network controller determines, according to each of the execution status messages, that the operation result of any one of the operation instructions executed by any one of the forwarding devices is: execution failed,
further sending, by the network controller, the rollback control instruction to each of the forwarding devices for which an execution failure is determined.

With reference to the first aspect, the first implementation manner of the first aspect, or the second implementation manner of the first aspect, in a third implementation manner of the first aspect, before the sending, by a network controller, according to a network transaction, an operation set package including at least one operation instruction to at least two forwarding devices, the method further includes:
receiving, by the network controller, the network transaction from a service system; and
converting, by the network controller, the network transaction into the operation set package.

According to a second aspect, an embodiment of the present invention provides a network transaction executing method, where the method is applied in a system in which control and forwarding are separated and includes:
receiving, by a forwarding device, an operation set package sent by a network controller, where the operation set package includes an atomic operation identifier and at least one operation instruction, the atomic operation identifier is used to uniquely identify one network transaction, and the network transaction is corresponding to at least one operation set package;
executing, by the forwarding device, each of the operation instructions, and feeding back an execution status message to the network controller, where the execution status message includes: the atomic operation identifier and an operation result of the operation instruction executed by the forwarding device; and
if execution of any one of the operation instructions fails, restoring, by the forwarding device, to a state that is prior to execution of each of the operation instructions in the operation set package.

With reference to the second aspect, in a first implementation manner of the second aspect, the method further includes:
receiving, by the forwarding device, a rollback control instruction delivered by the network controller, where:
   correspondingly, the restoring, by the forwarding device, to a state that is prior to execution of each of the operation instructions in the operation set package is specifically:
      restoring, by the forwarding device according to the rollback control instruction delivered by the network controller, to the state that is prior to execution of each of the operation instructions in the operation set package; where:
      the rollback control instruction includes the atomic operation identifier.

With reference to the second aspect, in a second implementation manner of the second aspect, the restoring, by the forwarding device, to a state that is prior to execution of each of the operation instructions in the operation set package is specifically:
proactively executing, by the forwarding device, a rollback operation, to restore to the state that is prior to execution of each of the operation instructions in the operation set package.

According to a third aspect, an embodiment of the present invention provides a network controller, where the network controller is applied in a system in which control and forwarding are separated and includes:
a transceiver unit, configured to communicate with each forwarding device applied to the system in which control and forwarding are separated, where the communicating includes:
   sending, according to a network transaction, an operation set package including at least one operation instruction to at least two of the forwarding devices, where the operation set package includes : an atomic operation identifier used to uniquely identify the network transaction;
   receiving an execution status message fed back by each of the forwarding devices, where the execution status message includes: the atomic operation identifier and an operation result of each of the operation instructions executed by each of the forwarding devices; and
   when an operation result determining unit determines, according to each of the execution status messages, that an operation result of any one of the operation instructions executed by any one of the forwarding devices is: execution failed, further separately sending a rollback control instruction including forwarding devices for which no execution failure has been determined, so as to instruct each of the forwarding devices for which no execution failure has been determined, to restore to a state that is prior to execution of each of the operation instructions in the operation set package; and
the operation result determining unit, configured to determine, according to each of the execution status messages, the operation result of each of the operation instructions executed by each of the forwarding devices.

With reference to the third aspect, in a first implementation manner of the third aspect, the network controller further includes:
a timing unit, where the timing unit is configured to start a timer after the transceiver unit sends the operation set package; and
the operation result determining unit is specifically configured to: when the timer started by the timing unit expires, if the transceiver unit has been not received an execution status message sent by one of the forwarding devices, determine that the operation result of the operation instruction executed by the forwarding device that has not fed back an execution status message is: execution failed.

With reference to the third aspect, in a second implementation manner of the third aspect, the operation result determining unit is specifically configured to determine, according to an execution failure status message carried in the execution status message, that the operation result of the operation instruction executed by the forwarding device that has fed back the execution status message is: execution failed.

With reference to the third aspect, in a third implementation manner of the third aspect, the transceiver unit is further configured to: when the operation result determining unit determines that an operation result of any one of the operation instructions executed by any one of the forwarding devices is: execution failed, send the rollback control instruction to each of the forwarding devices for which an execution failure is determined.

With reference to the third aspect, the first implementation manner of the third aspect, or the second implementation manner of the third aspect, in a fourth implementation manner of the third aspect, the network controller further includes:
a transaction converting unit, configured to: before the transceiver unit communicates with each forwarding device, receive the network transaction from a service system, and convert the network transaction into the operation set package.

According to a fourth aspect, an embodiment of the present invention provides a forwarding device, where the forwarding device is applied in a system in which control and forwarding are separated and includes:
a transceiver unit, configured to communicate with a network controller applied to the system in which control and forwarding are separated, where:
   the communicating includes: receiving an operation set package sent by the network controller, and sending an execution status message to the network controller after a status message determining unit determines the execution status message, where:
      the operation set package includes: an atomic operation identifier and at least one operation instruction, the atomic operation identifier is used to uniquely identify one network transaction, the network transaction is corresponding to at least one operation set package, and the execution status message includes: the atomic operation identifier and an operation result of the operation instruction executed by the executing unit;
      the executing unit, configured to execute the operation instruction;
      the status message determining unit, configured to determine the execution status message according to a situation of execution of the operation instruction by the executing unit; and
      a status restoring unit, configured to: if execution of any one of the operation instructions fails, restore to a state that is prior to execution of each of the operation instructions in the operation set package.

With reference to the fourth aspect, in a first implementation manner of the fourth aspect, the transceiver unit is further configured to: when the executing unit fails to execute any one of the operation instructions, receive a rollback control instruction delivered by the network controller;
the status restoring unit is specifically configured to: according to the rollback control instruction delivered by the network controller, restore to the state that is prior to execution of each of the operation instructions in the operation set package; where:
the rollback control instruction includes the atomic operation identifier.

With reference to the fourth aspect, in a second implementation manner of the fourth aspect, the status restoring unit is specifically configured to: when the executing unit fails to execute any one of the operation instructions, proactively execute a rollback operation to restore to the state that is prior to execution of each of the operation instructions in the operation set package.

As can be seen from the above, by using the technical solutions in the embodiments, in a system based on an architecture in which control and forwarding are separated, when a transaction needs to be executed, a network controller sends an operation set package to at least two forwarding devices according to a network transaction, where the operation set package includes : an atomic operation identifier and at least one operation instruction, and the atomic operation identifier is used to uniquely identify the network transaction that needs to be executed; when each forwarding device executes the operation instruction, each forwarding device feeds back an execution status message to the network controller according to an operation result of the operation instruction, where the execution status message includes: the atomic operation identifier and the operation result of the operation instruction executed by the forwarding device; and if an operation result of any operation instruction executed by any forwarding device is: execution failed, the network controller separately sends a rollback control instruction including the atomic operation identifier to each forwarding device for which no execution failure is determined, so as to instruct each forwarding device, for which no execution failure is determined, to restore to a state that is prior to execution of each operation instruction in the operation set package. Therefore, a situation in which a network transaction is incompletely executed is reduced, that is, a situation in which some devices successfully execute a network transaction and some devices fail to execute the network transaction is reduced.

Further, after the network controller sends the operation set package, the network controller may start a timer, and when the timer expires, if no execution status message from any forwarding device is received, determine that an execution result of the operation instruction executed by the forwarding device that has not fed back an execution status message is: execution failed. By using the technical solutions, when an execution status message fails to be sent to the network controller because a crash or another situation occurs when a forwarding device executes an operation instruction, the network controller can determine an operation result from the forwarding device, and therefore, a situation in which a network transaction is incompletely executed is further reduced.

Further, the network controller may further send the rollback control instruction to the forwarding device for which an execution failure is determined, so as to instruct the forwarding device to restore to the state that is prior to execution of each operation instruction in the operation instruction package, and therefore, a situation in which some devices successfully execute a network transaction and some devices fail to execute the network transaction is further reduced.

As can be seen from the above, compared with the prior art in which only a Barrier command can be used to ensure that a forwarding device executes operation instructions in sequence, but a situation in which a network transaction is incompletely executed cannot be avoid, in the technical solution in the present invention, a network transaction that needs to be executed is identified; a network controller communicates with each forwarding device, and monitors an operation result of an operation instruction in the operation set package; and for any network transaction that needs to be executed, when the network controller determines that an operation result of an operation instruction executed by any forwarding device is: execution failed, the network controller sends a rollback control instruction to the forwarding device for which no execution failure is determined, so as to instruct these forwarding devices to restore to a state that is prior to execution of the operation instruction. Therefore, a situation in which a network transaction is incompletely executed may be reduced, that is, a situation in which some devices successfully execute a network transaction and some devices fail to execute the network transaction may be reduced.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of a network transaction control method according to the present invention;
FIG. 2 is a schematic scenario diagram of an application scenario of a network transaction control method according to the present invention;
FIG. 3 is a schematic diagram of another optional process of a network transaction control method according to the present invention;
FIG. 4 is a schematic flowchart of a network transaction executing method according to the present invention;
FIG. 5 is a schematic structural diagram of a network controller according to the present invention;
FIG. 6 is a schematic structural diagram of a network controller according to the present invention;
FIG. 7 is a schematic structural diagram of a network controller according to the present invention;
FIG. 8 is a schematic structural diagram of a forwarding device according to the present invention;
FIG. 9 is a schematic structural diagram of a forwarding device according to the present invention;
FIG. 10 is a schematic structural diagram of a network controller according to the present invention; and
FIG. 11 is a schematic structural diagram of a forwarding device according to the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

### Embodiment 1

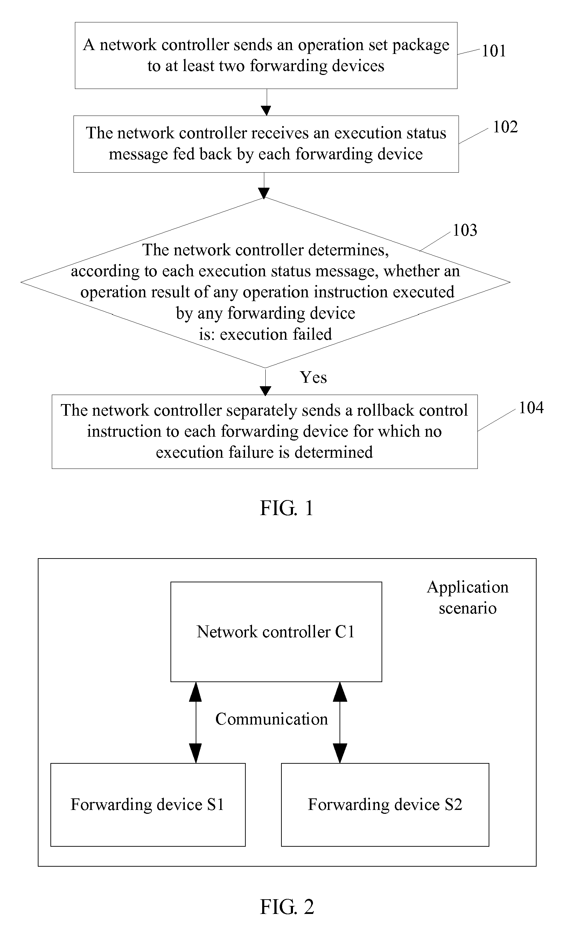

Referring to FIG. 1, the embodiment provides a network transaction control method applied in a system that is based on an architecture in which control and forwarding are separated, where the system based on the architecture may be but not limited to a system that is based on an SDN (software defined network, software defined network) or NFV (network function virtualization, network function virtualization) architecture. The network controller may be but not limited to one network controller or a controller system formed by multiple control devices. The network controller may be but not limited to controlling at least two forwarding devices.

Main steps of the method are as follows:
Step 101: A network controller sends an operation set package to at least two forwarding devices.

In the embodiment, the network controller sends the operation set package to at least two forwarding devices according to a network transaction that needs to be executed. The operation set package includes: an atomic operation identifier and at least one operation instruction. The atomic operation identifier is used to uniquely identify the network transaction, so as to ensure atomicity of the execution of the network transaction.

For example, before sending the operation set package to the at least two forwarding devices, the network controller may but is not limited to: receive a network transaction from an upper-layer service system, and convert the network transaction into the operation set package. For example, the network controller receives one network transaction from a service system, where the network transaction is creating a virtual network, the network controller automatically generates one or more operation set packages according to such information as network resource information, an implementation process of the network transaction, and transaction information of the network transaction, so that the one or more operation set packages are executed by one or more forwarding devices.

The network transaction may be cooperatively completed by one or more forwarding devices. The network controller determines, according to a need of the network transaction or configuration for the transaction by the network controller, each forwarding device needed for the network transaction and each operation instruction that needs to be executed by each forwarding device. After determining each forwarding device and each corresponding operation instruction, the network controller encapsulates the atomic operation identifier and the operation instruction into the operation set package. Because one network transaction may be cooperatively completed by multiple forwarding devices, one network transaction is corresponding to at least one operation set package, and all operation set packages include the atomic operation identifier used to uniquely identify the network transaction.

After receiving an operation set package, each forwarding device executes each corresponding operation instruction. The forwarding device may but is not limited to: set an operation corresponding to each successfully executed operation instruction as a pending state; and when the forwarding device receives a validation control instruction, the forwarding device validates the operation corresponding to each successfully executed operation instruction.

In the embodiment, the atomic operation identifier may be but not limited to a serial number or a number.

In the embodiment, the forwarding device may be but not limited to a router, a switch, or a network device having a forwarding function.
Step 102: The network controller receives an execution status message fed back by each forwarding device.

In the embodiment, the forwarding device feeds back the execution status message to the network controller according to an operation result of each operation instruction. The execution status message includes: the atomic operation identifier and an operation result of each operation instruction set executed by each forwarding device.
Step 103: The network controller determines, according to each execution status message, whether an operation result of any operation instruction executed by any forwarding device is: execution failed; and if yes, step 104 is executed.

For example, the network controller may determine, according to an execution failure status message carried in the execution status message, that the operation result of the operation instruction executed by the forwarding device that feeds back the execution status message is: execution failed.
Step 104: The network controller separately sends a rollback control instruction to each forwarding device for which no execution failure is determined.

In the embodiment, as long as an operation result of any operation instruction executed by any forwarding device is: execution failed, the network controller sends the rollback control instruction including the atomic operation identifier to each forwarding device for which no execution failure is determined, so as to instruct each forwarding device for which an execution failure is determined, to restore to a state that is prior to execution of each operation instruction in the operation set package. That execution of any operation instruction fails indicates that the network transaction fails to be completely executed. According to the rollback control instruction, each forwarding device for which no execution failure is determined is restored to the state that is prior to execution of each operation instruction, which can avoid a situation in which the network transaction is incompletely executed.

For ease of understanding, the following describes an application scenario. Referring to FIG. 2, FIG. 2 is a diagram of an application scenario of a system formed by one network controller C1 and two forwarding devices S1 and S2, where S1 and S2 separately is a switch. When a network transaction that needs to be executed is: creating two flow tables, and the network transaction needs to be cooperatively executed by S1 and S2, network controller C1 separately creates an operation set package for S1 and S2 according to the network transaction. In this scenario, the operation set package is flow table creation information, and the flow table creation information includes at least one operation instruction, and an atomic operation identifier included in the operation set package is a string of serial numbers.

After separately receiving the flow table creation information, forwarding devices S1 and S2 execute a corresponding operation instruction, and an operation corresponding to the operation instruction is: creating a flow table. For example, in a flow table creation process, if S1 fails in executing some operation instructions, and S2 successfully executes all operation instructions, S1 feeds back an execution failure message to network controller C1, where the execution failure message carries the serial numbers, and at this time, if S1 has a capability of proactively executing a rollback operation when execution of an operation instruction fails and is preset to proactively execute the rollback operation when execution of an operation instruction fails, S1 may further proactively restore to a state that is prior to no execution of flow table creation; and S2 feeds back an execution success message to network controller C1, where the execution success message carries the serial numbers. The network controller sends a rollback control instruction to S2 according to the messages fed back by S1 and S2 and the serial numbers, where the rollback control instruction carries the serial numbers, so as to instruct S2 to delete all flow table information corresponding to the serial numbers from the rollback control instruction, that is, to instruct S2 to restore to a state that is prior to the flow table creation.

As can be seen from the above, by using the technical solution in the embodiment, in a system based on an architecture in which control and forwarding are separated, when a transaction needs to be executed, a network controller sends an operation set package to at least two forwarding devices according to a network transaction, where the operation set package includes : an atomic operation identifier and at least one operation instruction, and the atomic operation identifier is used to uniquely identify the network transaction that needs to be executed; when each forwarding device executes the operation instruction, each forwarding device feeds back an execution status message to the network controller according to an operation result of the operation instruction, where the execution status message includes: the atomic operation identifier and the operation result of the operation instruction executed by the forwarding device; and if an operation result of any operation instruction executed by any forwarding device is: execution failed, the network controller separately sends a rollback control instruction including the atomic operation identifier to each forwarding device for which no execution failure is determined, so as to instruct each forwarding device for which no execution failure is determined, to restore to a state that is prior to execution of each operation instruction in the operation set package. This helps reduce a situation in which a network transaction is incompletely executed, that is, reduce a situation in which some devices successfully execute a same network transaction and some devices fail to execute the same network transaction.

As can be seen from the above, compared with the prior art in which only a Barrier command can be used to ensure that a forwarding device executes operation instructions in sequence, but a situation in which a network transaction is incompletely executed cannot be avoid, in the technical solution in the present invention, a network transaction that needs to be executed is identified; a network controller communicates with each forwarding device, and monitors an operation result of an operation instruction in the operation set package; and for any network transaction that needs to be executed, when the network controller determines that an operation result of an operation instruction executed by any forwarding device is: execution failed, the network controller sends a rollback control instruction to the forwarding device for which no execution failure is determined, so as to instruct these forwarding devices to restore to a state that is prior to execution of the operation instruction. Therefore, a situation in which a network transaction is incompletely executed may be reduced, that is, a situation in which some devices successfully execute a network transaction and some devices fail to execute the network transaction may be reduced.

### Embodiment 2

A difference between the embodiment and Embodiment 1 mainly lies in that: in step 103, that the network controller determines, according to an execution status message, an operation result of any operation instruction executed by any forwarding device is specifically:
starting, by the network controller, a timer after sending the operation set package, and if no execution status message sent by one of the forwarding devices is received when the timer expires, determining, by the network controller, that the operation result of the operation instruction executed by the forwarding device that has not fed back an execution status message is: execution failed.

As can be seen from the above, the embodiment has a beneficial effect of Embodiment 1, and further, when the network controller fails to send the execution status message because a crash or another situation occurs when a forwarding device executes the operation instruction, the network controller can determine the operation result from the forwarding device, and therefore, a situation in which a network transaction is incompletely executed is further avoided.

### Embodiment 3

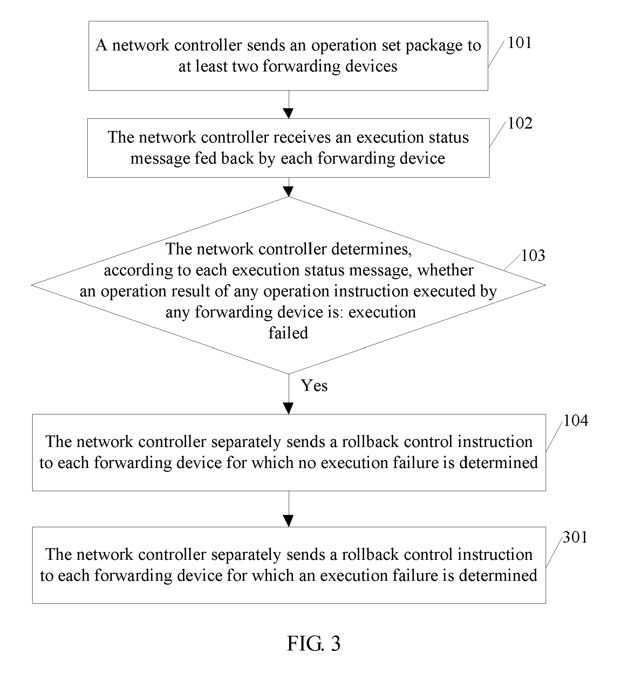

Referring to FIG. 3, a difference between the embodiment and Embodiment 1 mainly lies in that: after step 104, the method further includes the following steps:
Step 301: The network controller separately sends a rollback control instruction to each forwarding device for which an execution failure is determined.

In the embodiment, the network controller sends the rollback control instruction to each forwarding device for which an execution failure is determined, so as to instruct the forwarding device to restore to a state that is prior to execution of the operation instruction. When any forwarding device fails to execute any operation instruction, the network controller sends the rollback control instruction to all forwarding devices that execute the network transaction, so as to ensure that all the forwarding devices can restore to a state that is prior to execution of the operation instruction.

For example, when switch S1 in Embodiment 1 fails to execute some operation instructions, but S1 is not preset to proactively execute a rollback operation when execution of an operation instruction fails, or S1 does not have the capability of proactively executing a rollback operation when execution of an operation instruction fails, network controller C1 may send a rollback control instruction to S1 after determining that execution by S1 fails; or even though S1 proactively executes a rollback operation when execution fails, network controller C1 has no idea of whether S1 proactively executes the rollback operation when execution fails, and network controller C1 may also send a rollback control instruction to S1 after determining that execution by S1 fails.

As can be seen from the above, the embodiment has a beneficial effect of Embodiment 1, and in addition, the network controller sends the rollback control instruction to the forwarding device for which an execution failure is determined, so as to instruct the forwarding device to restore to a state that is prior to execution of each operation instruction that is in the operation instruction package, and therefore, a situation in which some devices successfully execute a network transaction and some devices fail to execute the network transaction is further reduced.

### Embodiment 4

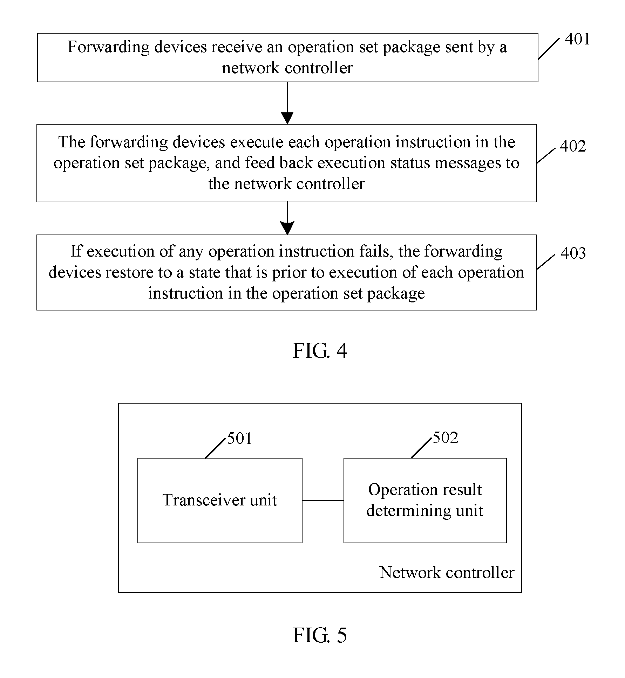

Referring to FIG. 4, the embodiment provides a network transaction executing method, which is applied to a forwarding device, such as a router, a switch, or a network device having a forwarding function, in a system based on an architecture in which control and forwarding are separated. The system based on the architecture may be but not limited to a system that is based on an SDN or NFV architecture.

Main steps of the method are as follows:
Step 401: Forwarding devices receive an operation set package sent by a network controller.

In the embodiment, the network controller sends the operation set package to at least two forwarding devices according to a transaction that needs to be executed. The operation set package includes: an atomic operation identifier and at least one operation instruction, where the atomic operation identifier is used to uniquely identify one network transaction, and the network transaction is corresponding to at least one operation set package.

The network transaction may be cooperatively completed by one or more forwarding devices. The network controller determines, according to a need of the network transaction or configuration for the transaction by the network controller, each forwarding device needed for the network transaction and each operation instruction that needs to be executed by each forwarding device.

In the embodiment, the atomic operation identifier may be but not limited to a serial number or a user-defined number.
Step 402: The forwarding devices execute each operation instruction in the operation set package, and feed back execution status messages to the network controller.

In the embodiment, the execution status message includes: the atomic operation identifier and an operation result of the operation instruction executed by a forwarding device.

For example, the forwarding devices feed back execution success status messages or execution failure status messages to the network controller, so as to notify the network controller of operation results of the operation set package executed by the forwarding devices. If all operation instructions in the operation set package are executed successfully, the forwarding devices feed back execution success status messages to the network controller; otherwise, feed back execution failure status messages.

Optionally, if an operation result of any operation instruction executed by a forwarding device is: execution failed, the forwarding device may, within predetermined times, re-execute the execution failed operation instruction. If the execution still fails within the predetermined times, step 404 is executed.
Step 403: If execution of any operation instruction fails, the forwarding devices restore to a state that is prior to execution of each operation instruction in the operation set package.

As an example of the embodiment, a forwarding device may restore, after execution of any operation instruction fails, according to a rollback control instruction delivered by the network controller, to a state that is prior to execution of each operation instruction in the operation set package. The rollback control instruction includes the atomic operation identifier, and may be but not limited to be used to undo a device operation corresponding to the operation instruction and release an execution resource of the operation instruction.

As an example of the embodiment, a forwarding device may proactively execute a rollback operation after execution of any operation instruction fails, to restore to a state that is prior to execution of each operation instruction in the operation set package. As can be seen from the above, by using the technical solution in the embodiment, in a system based on an architecture in which control and forwarding are separated, when a transaction needs to be executed, forwarding devices receive an operation set package sent by a network controller, where the operation set package includes an atomic operation identifier and at least one operation instruction, the atomic operation identifier is used to uniquely identify the network transaction that needs to be executed, and the network transaction is corresponding to at least one operation set package; when the forwarding devices execute each operation instruction in the operation set package, the forwarding devices feed back execution status messages to the network controller according to operation results of the operation instructions, where the execution status message includes: the atomic operation identifier and an operation result of the operation instruction executed by a forwarding device; and if an operation result of any operation instruction executed by the forwarding devices is: execution failed, the forwarding devices restore to a state that is prior to execution of each operation instruction in the operation set package. This helps reduce a situation in which a network transaction is incompletely executed, that is, helps reduce a situation in which some devices successfully execute a network transaction and some devices fail to execute the network transaction.

As can be seen from the above, compared with the prior art in which only a Barrier command can be used to ensure that a forwarding device executes operation instructions in sequence, but a situation in which a network transaction is incompletely executed cannot be avoid, in the technical solution in the present invention, a network transaction that needs to be executed is identified; forwarding devices communicate with a network controller, and feed back operation results of an operation instruction in the operation set package to the network controller; and when any forwarding device fails to execute the instruction in the operation set package, the forwarding device proactively executes a rollback operation, or executes a rollback operation according to a rollback control instruction sent by the network controller, so that the forwarding device restores to a state that is prior to execution of the operation instruction. This helps reduce a situation in which a network transaction is incompletely executed, that is, reduce a situation in which some devices successfully execute a network transaction and some devices fail to execute the network transaction.

### Embodiment 5

Referring to FIG. 5, the embodiment provides a network controller applied in a system in which control and forwarding are separated, and FIG. 5 is a schematic diagram of a connecting structure of the network controller, which mainly includes: a transceiver unit 501 and an operation result determining unit 502. The network controller may be but not limited to a network controller in a system that is based on an SDN or NFV architecture, and control at least two forwarding devices.

The network controller in the embodiment may correspondingly execute the methods in Embodiments 1 to 3.

A main connecting structure and a working principle of each component are as follows:

The transceiver unit 501 is configured to communicate with each forwarding device applied to the system in which control and forwarding are separated.

The communicating includes: sending an operation set package including at least one operation instruction to at least two forwarding devices according to a network transaction, where the operation set package includes : an atomic operation identifier used to uniquely identify the network transaction; receiving an execution status message fed back by each forwarding device, where the execution status message includes: the atomic operation identifier and an operation result of each operation instruction executed by each forwarding device; and when the operation result determining unit 502 determines, according to each execution status message, that the operation result of any operation instruction executed by any one of the forwarding devices is: execution failed, further separately sending a rollback control instruction including the atomic operation identifier to each forwarding device for which no execution failure is determined, so as to instruct each forwarding device, for which no execution failure is determined, to restore to a state that is prior to execution of each operation instruction in the operation set package.

The operation result determining unit 502 is electrically connected to the transceiver unit 501 and configured to determine, according to each execution status message, the operation result of each operation instruction executed by each forwarding device.

Optionally, the transceiver unit 501 is further configured to: when the operation result determining unit 502 determines, according to each execution status message, that the operation result of any operation instruction executed by any one of the forwarding devices is: execution failed, further separately send a rollback control instruction including the atomic operation identifier to each forwarding device for which an execution failure is determined, so as to instruct each forwarding device for which an execution failure is determined, to restore to a state that is prior to execution of each operation instruction in the operation set package.

Optionally, the operation result determining unit 502 is specifically configured to determine, according to an execution failure status message carried in the execution status message, that an operation result of the operation instruction executed by the forwarding device that has fed back the execution status message is: execution failed.

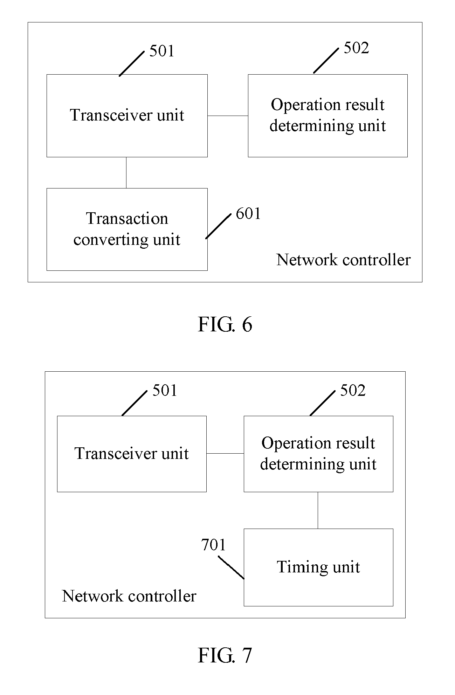

Optionally, referring to FIG. 6, FIG. 6 is another connecting structure of a network controller, and a difference between FIG. 6 and FIG. 5 lies in that: the network controller further includes a transaction converting unit 601, which is electrically connected to the transceiver unit 501 and configured to receive, before the transceiver unit 501 communicates with each forwarding device, a network transaction from a service system and convert the network transaction into the operation set package.

Optionally, referring to FIG. 7, FIG. 7 is another connecting structure of a network controller, and a difference between FIG. 7 and FIG. 5 lies in that: the network controller further includes: a timing unit 701, which is electrically connected to the operation result determining unit 502, and configured to start a timer after the transceiver unit 501 sends the operation set package. Correspondingly, the operation result determining unit 502 is further configured to: when the timer started by the timing unit 701 expires, if the transceiver unit 501 does not receive an execution status message sent by one of the forwarding devices, determine that an operation result of the operation instruction executed by the forwarding device that has not fed back an execution status message is: execution failed.

As can be seen from the above, by using the technical solution in the embodiment, in a system based on an architecture in which control and forwarding are separated, when a transaction needs to be executed, a transceiver unit 501 sends an operation set package to at least two forwarding devices according to a network transaction, where the operation set package includes : an atomic operation identifier and at least one operation instruction, and the atomic operation identifier is used to uniquely identify the network transaction that needs to be executed; when each forwarding device executes the operation instruction and feeds back an execution status message to a network controller, the transceiver unit 501 receives the execution status message, where the execution status message includes the atomic operation identifier and an operation result of the operation instruction executed by a forwarding device; and an operation result determining unit 502 determines, according to the execution status message, an operation result of each operation instruction executed by each forwarding device, and if the operation result of any operation instruction executed by any forwarding device is: execution failed, the transceiver unit 501 separately sends a rollback control instruction including the atomic operation identifier to each forwarding device for which no execution failure is determined, so as to instruct each forwarding device, for which no execution failure is determined, to restore to a state that is prior to execution of each operation instruction in the operation set package. This helps reduce a situation in which a network transaction is incompletely executed, that is, reduce a situation in which some devices successfully execute a network transaction and some devices fail to execute the network transaction.

As can be seen from the above, compared with the prior art in which only a Barrier command can be used to ensure that a forwarding device executes operation instructions in sequence, but a situation in which a network transaction is incompletely executed cannot be avoid, in the technical solution in the present invention, a network transaction that needs to be executed is identified; a network controller communicates with each forwarding device, and monitors an operation result of an operation instruction in the operation set package; and for any network transaction that needs to be executed, when the network controller determines that an operation result of an operation instruction executed by any forwarding device is: execution failed, the network controller sends a rollback control instruction to the forwarding device for which no execution failure is determined, so as to instruct these forwarding devices to restore to a state that is prior to execution of the operation instruction. Therefore, a situation in which a network transaction is incompletely executed may be reduced, that is, a situation in which some devices successfully execute a network transaction and some devices fail to execute the network transaction may be reduced.

Further, according to the network controller shown in FIG. 7, when a timer started by a timing unit 701 expires, if the transceiver unit 501 does not receive an execution status message sent by one of the forwarding devices, the operation result determining unit 502 determines that an operation result of the operation instruction executed by the forwarding device that has not fed back an execution status message is: execution failed. By using the technical solution, when an execution status message fails to be sent to the network controller because a crash or another situation occurs when a forwarding device executes an operation instruction, the network controller can determine an operation result of the forwarding device, and therefore, a situation in which a network transaction is incompletely executed is further reduced.

### Embodiment 6

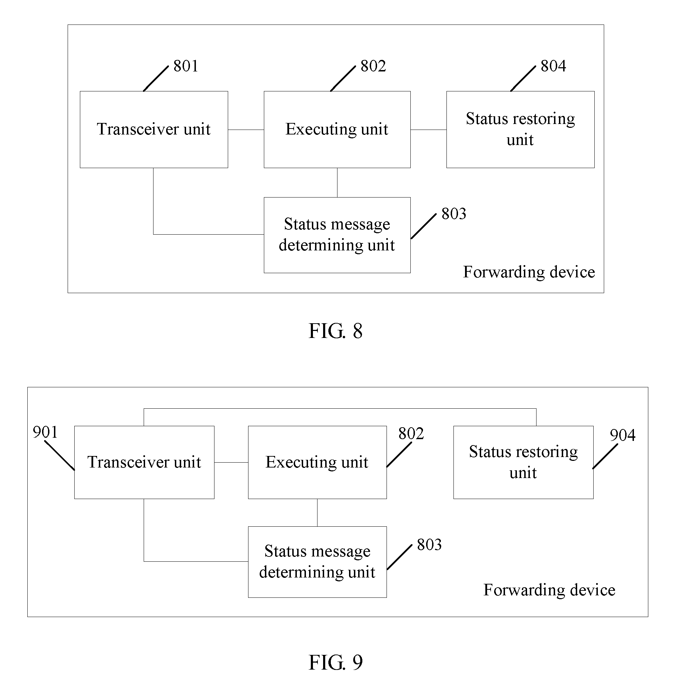

Referring to FIG. 8, the embodiment provides a forwarding device applied in a system that is based on an architecture in which control and forwarding are separated. FIG. 8 is a schematic diagram of a connecting structure of the forwarding device, and the forwarding device mainly includes: a transceiver unit 801, an executing unit 802, a status message determining unit 803, and a status restoring unit 804. The forwarding device may be but not limited to a forwarding device in a system that is based on an SDN or NFV architecture.

The forwarding device in the embodiment may correspondingly execute the method in Embodiment 4.

A connecting structure and a working principle of each unit are as follows:
The transceiver unit 801 is configured to communicate with a network controller in the system that is based on the architecture in which control and forwarding are separated.

In the embodiment, the communicating includes: receiving an operation set package sent by the network controller, and after the status message determining unit 802 determines an execution status message, sending the execution status message to the network controller. The operation set package includes: an atomic operation identifier and at least one operation instruction. The atomic operation identifier is used to uniquely identify one network transaction. The network transaction is corresponding to at least one operation set package. The execution status message includes: the atomic operation identifier and an operation result of the operation instruction executed by the executing unit.

The executing unit 802 is electrically connected to the transceiver unit 801, and configured to execute the operation instruction in the operation set package.

The status message determining unit 803 is electrically connected to the transceiver unit 801 and the executing unit 802 separately, and configured to determine the execution status message according to a situation of execution of the operation instruction executed by the executing unit 802.

In the embodiment, the execution status message may include, but not limited to, an operation result of each operation instruction, or a total operation result of the operation set package. If execution of any operation instruction fails in an execution process, it is determined that the total operation result in the execution status message is: execution failed; and if all operation instructions are successfully executed, it is determined that the total operation result in the execution status message is: execution succeeded.

The status restoring unit 804 is configured to: if execution of any one of the operation instructions fails, restore to a state that is prior to execution of each operation instruction in the operation set package.

Optionally, according to the forwarding device shown in FIG. 8, the status restoring unit 804 is electrically connected to the executing unit 802, and specifically configured to: when the executing unit 802 fails in executing any operation instruction, proactively execute a rollback operation, and restore to the state that is prior to execution of each operation instruction in the operation set package.

As an example of the embodiment, referring to FIG. 9, FIG. 9 is a schematic diagram of another connecting structure of the forwarding device, where a status restoring unit 904 is electrically connected to a transceiver unit 901. The transceiver unit 901 in the embodiment is configured to communicate with the network controller in the system that is based on the architecture in which control and forwarding are separated, and further includes receiving a rollback control instruction sent by the network controller; and correspondingly, the status restoring unit 904 in the embodiment is configured to communicate with the network controller in the system that is based on the architecture in which control and forwarding are separated, and specifically configured to restore, according to a rollback control instruction delivered by the network controller and received by the transceiver unit 901, the forwarding device to a state that is prior to execution of each operation instruction in the operation set package, where the rollback control instruction includes the atomic operation identifier.

For a situation in which operation instructions are all executed successfully, which is content in the prior art, details are not described herein again.

As can be seen from the above, by using the technical solution in the embodiment, in a system based on an architecture in which control and forwarding are separated, when a transaction needs to be executed, a transceiver unit 801 receives an operation set package sent by a network controller, where the operation set package includes an atomic operation identifier and at least one operation instruction, the atomic operation identifier is used to uniquely identify the network transaction that needs to be executed, and the network transaction is corresponding to at least one operation set package; when an executing unit 802 executes each operation instruction in the operation set package, a status message determining unit 803 determines an execution status message according to an operation result of the operation instruction, and the transceiver unit 801 feeds back the execution status message to the network controller, where the execution status message includes: the atomic operation identifier and an operation result of the operation instruction executed by a forwarding device; and if an operation result of any operation instruction executed by the executing unit 802 is: execution failed, the status restoring unit 804 restores the forwarding device to a state that is prior to execution of each operation instruction in the operation set package. This helps reduce a situation in which a network transaction is incompletely executed, that is, reduce a situation in which some devices successfully execute a network transaction and some devices fail to execute the network transaction.

As can be seen from the above, compared with the prior art in which only a Barrier command can be used to ensure that a forwarding device executes operation instructions in sequence, but a situation in which a network transaction is incompletely executed cannot be avoid, in the technical solution in the present invention, a network transaction that needs to be executed is identified; a forwarding device communicates with a network controller, and feeds back an operation result of an operation instruction in the operation set package to the network controller; and when any forwarding device fails to execute the instruction in the operation set package, the forwarding device proactively executes a rollback operation, or executes a rollback operation according to a rollback control instruction sent by the network controller, so that the forwarding device restores to a state that is prior to execution of the operation instruction. This helps reduce a situation in which a network transaction is incompletely executed, that is, reduce a situation in which some devices successfully execute a same network transaction and some devices fail to execute the same network transaction.

### Embodiment 7

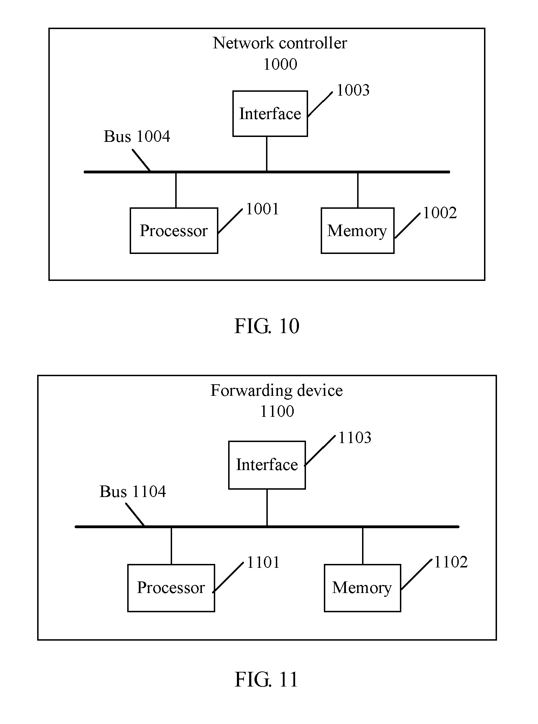

Referring to FIG. 10, the embodiment of the present invention further provides a network controller 1000 applied in a system that is based on an architecture in which control and forwarding are separated. The forwarding device in the embodiment may correspondingly execute the methods in Embodiments 1 to 3.

As shown in FIG. 10, the network controller 1000 includes: a bus 1004, and a processor 1001, a memory 1002, and an interface 1003 that are connected to the bus 1004. The interface 1003 is configured to communicate with at least two forwarding devices; and the memory 1002 is configured to store an instruction, and the processor 1001 is configured to execute the instruction, and configured to send an operation set package including at least one operation instruction to the at least two forwarding devices according to a network transaction, where the operation set package includes : an atomic operation identifier used to uniquely identify the network transaction. The processor 1001 executes the instruction, and is further configured to receive an execution status message fed back by each forwarding device, where the execution status message includes: the atomic operation identifier and an operation result of each operation instruction executed by each forwarding device. The processor 1001 executes the instruction, and is further configured to determine, according to each of the execution status messages, whether the operation result of any operation instruction executed by any forwarding device is: execution failed, and if yes, separately send a rollback control instruction including forwarding devices for which no execution failure has been determined, so as to instruct each of the forwarding devices for which no execution failure has been determined, to restore to a state that is prior to execution of each operation instruction in the operation set package.

In the embodiment of the present invention, optionally, that the processor 1001 executes the instruction, and is configured to determine, according to each of the execution status messages, that the operation result of any operation instruction executed by any forwarding device is: execution failed is specifically that: starting, by the network controller, a timer after sending the operation set package, and when the timer expires, if no execution status message sent by a forwarding device is received, determining, by the network controller, that the operation result of the operation instruction executed by the forwarding device that has not fed back an execution status message is: execution failed; or determining, according to an execution failure status message carried in the execution status message, that an operation result of the operation instruction executed by the forwarding device that has fed back the execution status message is: execution failed.

In the embodiment of the present invention, optionally, the processor 1001 executes the instruction, and is further configured to: if it is determined, according to each of the execution status messages, that the operation result of any operation instruction executed by any forwarding device is: execution failed, further send a rollback control instruction to each forwarding device for which an execution failure is determined.

In the embodiment of the present invention, optionally, before the processor 1001 executes the instruction, and is further configured to send an operation set package including at least one operation instruction to the at least two forwarding devices according to a network transaction, further includes: receiving the network transaction from a service system, and converting the network transaction into the operation set package.

As can be seen from the above, by using the technical solution in the embodiment, in a system based on an architecture in which control and forwarding are separated, when a transaction needs to be executed, a network controller in the embodiment of the present invention sends an operation set package to at least two forwarding devices according to a network transaction, where the operation set package includes : an atomic operation identifier and at least one operation instruction, and the atomic operation identifier is used to uniquely identify the network transaction that needs to be executed; when each forwarding device executes the operation instruction, each forwarding device feeds back an execution status message to the network controller according to an operation result of the operation instruction, where the execution status message includes: the atomic operation identifier and the operation result of the operation instruction executed by the forwarding device; and if an operation result of any operation instruction executed by any forwarding device is: execution failed, the network controller separately sends a rollback control instruction including the atomic operation identifier to each forwarding device for which no execution failure is determined, so as to instruct each forwarding device for which no execution failure is determined, to restore to a state that is prior to execution of each operation instruction in the operation set package. Therefore, a situation in which a network transaction is incompletely executed is reduced, that is, a situation in which some devices successfully execute a same network transaction and some devices fail to execute the same network transaction is reduced.

Optionally, after the network controller sends the operation set package, the network controller may start a timer, and when the timer expires, if no execution status message from a forwarding device is received, determine that an execution result of the operation instruction executed by the forwarding device that has not fed back an execution status message is: execution failed. By using the technical solution, when an execution status message fails to be sent to the network controller because a crash or another situation occurs when a forwarding device executes an operation instruction, the network controller can determine an operation result of the forwarding device, and therefore, a situation in which a network transaction is incompletely executed is further reduced.

Optionally, the network controller may further send the rollback control instruction to the forwarding device for which an execution failure is determined, so as to instruct the forwarding device to restore to the state that is prior to execution of each operation instruction in the operation instruction package, and therefore, a situation in which some devices successfully execute a same network transaction and some devices fail to execute the same network transaction is further reduced.

As can be seen from the above, compared with the prior art in which only a Barrier command can be used to ensure that a forwarding device executes operation instructions in sequence, but a situation in which a network transaction is incompletely executed cannot be avoid, in the technical solution in the present invention, a network transaction that needs to be executed is identified; a network controller communicates with each forwarding device, and monitors an operation result of an operation instruction in the operation set package; and for any network transaction that needs to be executed, when the network controller determines that an operation result of an operation instruction executed by any forwarding device is: execution failed, the network controller sends a rollback control instruction to the forwarding device for which no execution failure is determined, so as to instruct these forwarding devices to restore to a state that is prior to execution of the operation instruction. Therefore, a situation in which a network transaction is incompletely executed may be reduced, that is, a situation in which some devices successfully execute a same network transaction and some devices fail to execute the same network transaction may be reduced.

### Embodiment 8

Referring to FIG. 11, the embodiment provides a forwarding device 1100 applied in a system that is based on an architecture in which control and forwarding are separated, and the forwarding device in the embodiment may correspondingly execute the method in Embodiment 4.

As shown in FIG. 11, the forwarding device 1100 includes: a bus 1104, and a processor 1101, a memory 1102, and an interface 1103 that are connected to the bus 1104. The interface 1103 is configured to communicate with a network controller in the system; the memory 1102 is configured to store an instruction; and the processor 1101 is configured to execute the instruction, and configured to receive an operation set package sent by the network controller, where the operation set package includes an atomic operation identifier and at least one operation instruction, the atomic operation identifier is configured to uniquely identify one network transaction, and the network transaction is corresponding to at least one operation set package. The processor 1101 executes the instruction, and is further configured to execute each operation instruction and feed back an execution status message to the network controller, where the execution failure status message includes: the atomic operation identifier and an operation result of the operation instruction executed by a forwarding device. The processor 1101 executes the instruction, and is further configured to: if execution of any operation instruction fails, restore to a state that is prior to execution of each operation instruction in the operation set package.

In the embodiment of the present invention, optionally, the processor 1101 executes the instruction, and is further configured to receive a rollback control instruction delivered by the network controller, and correspondingly, the restoring to a state that is prior to execution of each operation instruction in the operation set package is specifically that: restoring, according to the rollback control instruction delivered by the network controller, the forwarding device to the state that is prior to execution of each of the operation instructions in the operation set package, where the rollback control instruction includes the atomic operation identifier.

In the embodiment of the present invention, optionally, that the processor 1101 executes the instruction, and is configured to restore to a state that is prior to execution of each operation instruction in the operation set package is specifically that: proactively executing a rollback operation, to restore to the state that is prior to execution of each operation instruction in the operation set package.

Therefore, according to the forwarding device in the embodiment of the present invention, in a system based on an architecture in which control and forwarding are separated, when a transaction needs to be executed, the forwarding device receives an operation set package sent by a network controller, where the operation set package includes an atomic operation identifier and at least one operation instruction, the atomic operation identifier is used to uniquely identify the network transaction that needs to be executed; and the network transaction is corresponding to at least one operation set package; when the forwarding device executes each operation instruction in the operation set package, the forwarding device feeds back an execution status message to the network controller according to an operation result of the operation instruction, where the execution status message includes: the atomic operation identifier and the operation result of the operation instruction executed by the forwarding device; and if an operation result of any operation instruction executed by the forwarding device is: execution failed, the forwarding device restores to a state that is prior to execution of each operation instruction in the operation set package. This helps reduce a situation in which a network transaction is incompletely executed, that is, helps reduce a situation in which some devices successfully execute a network transaction and some devices fail to execute the network transaction.

As can be seen from the above, compared with the prior art in which only a Barrier command can be used to ensure that a forwarding device executes operation instructions in sequence, but a situation in which a network transaction is incompletely executed cannot be avoid, in the technical solution in the present invention, a network transaction that needs to be executed is identified; a forwarding device communicates with a network controller, and feeds back an operation result of an operation instruction in the operation set package to the network controller; and when any forwarding device fails to execute the instruction in the operation set package, the forwarding device proactively executes a rollback operation, or executes a rollback operation according to a rollback control instruction sent by the network controller, so that the forwarding device restores to a state that is prior to execution of the operation instruction. This helps reduce a situation in which a network transaction is incompletely executed, that is, reduce a situation in which some devices successfully execute a network transaction and some devices fail to execute the network transaction.

Based on the foregoing descriptions of the embodiments, a person skilled in the art may clearly understand that each implementation manner may be implemented by software in addition to a necessary general hardware platform or by hardware. Based on such an understanding, the foregoing technical solutions essentially or the part contributing to the prior art may be implemented in a form of a software product. The software product is stored in a computer readable storage medium, such as a ROM/RAM, a hard disk, or an optical disc, and includes several instructions for instructing a computer device (which may be a personal computer, a server, a network device, or the like) to perform the methods described in the embodiments or some parts of the embodiments.

The foregoing implementation manners are not intended to limit the protection scope of the technical solutions. Any modification, equivalent replacement, and improvement made without departing from the spirit and principle of the foregoing implementation manners shall fall within the protection scope of the technical solutions.

## Claims

1. A network transaction control method, wherein the method is applied in a system in which control and forwarding are separated, and comprises:
sending, by a network controller, according to a network transaction, an operation set package comprising at least one operation instruction to at least two forwarding devices wherein:
the operation set package comprises : an atomic operation identifier used to uniquely identify the network transaction;
receiving, by the network controller, an execution status message fed back by each of the forwarding devices, wherein the execution status message comprises: the atomic operation identifier and an operation result of an operation instruction executed by a forwarding devices and
if the network controller determines, according to each of the execution status messages, that an operation result of any one of the operation instructions executed by any one of the forwarding devices is: execution failed,
separately sending, by the network controller, a rollback control instruction comprising forwarding devices for which no execution failure has been determined, so as to instruct each of the forwarding devices for which no execution failure has been determined, to restore to a state that is prior to execution of each of the operation instructions in the operation set package.

2. The network transaction control method according to claim 1, wherein:
the determining, by the network controller according to each of the execution status messages, that the operation result of any one of the operation instructions executed by any one of the forwarding devices is: execution failed is specifically:
starting, by the network controller, a timer after sending the operation set package, and if no execution status message sent by one of the forwarding devices has been received when the timer expires, determining, by the network controller, that the operation result of the operation instruction executed by the forwarding device that has not fed back an execution status message is: execution failed; or
determining, by the network controller according to an execution failure status message carried in the execution status message, that the operation result of the operation instruction executed by the forwarding device that had fed back the execution status message is: execution failed.

3. The network transaction control method according to claim 1, wherein the method further comprises:
if the network controller determines, according to each of the execution status messages, that the operation result of any one of the operation instructions executed by any one of the forwarding devices is: execution failed,
further sending, by the network controller, the rollback control instruction to each of the forwarding devices for which an execution failure is determined.

4. The network transaction control method according to any one of claims 1 to 3, wherein before the sending, by a network controller, according to a network transaction, an operation set package comprising at least one operation instruction to at least two forwarding devices, the method further comprises:
receiving, by the network controller, the network transaction from a service system; and
converting, by the network controller, the network transaction into the operation set package.

5. A network transaction executing method, wherein the method is applied in a system in which control and forwarding are separated, and comprises:
receiving, by a forwarding device, an operation set package sent by a network controller, wherein the operation set package comprises: an atomic operation identifier and at least one operation instruction, the atomic operation identifier is used to uniquely identify one network transaction, and the network transaction is corresponding to at least one operation set package;
executing, by the forwarding device, each of the operation instructions, and feeding back an execution status message to the network controller, wherein the execution status message comprises: the atomic operation identifier and an operation result of the operation instruction executed by the forwarding device; and
restoring, by the forwarding device, to a state that is prior to execution of each of the operation instructions in the operation set package if execution of any one of the operation instructions fails.

6. The network transaction executing method according to claim 5, further comprising:
receiving, by the forwarding device, a rollback control instruction delivered by the network controller, wherein:
correspondingly, the restoring, by the forwarding device, to a state that is prior to execution of each of the operation instructions in the operation set package is specifically:
restoring, by the forwarding device according to the rollback control instruction delivered by the network controller, to the state that is prior to execution of each of the operation instructions in the operation set package; wherein:
the rollback control instruction comprises the atomic operation identifier.

7. The network transaction executing method according to claim 5, wherein:
the restoring, by the forwarding device, to a state that is prior to execution of each of the operation instructions in the operation set package is specifically:
proactively executing, by the forwarding device, a rollback operation, to restore to the state that is prior to execution of each of the operation instructions in the operation set package.

8. A network controller, wherein the network controller is applied in a system in which control and forwarding are separated, and comprises:
a transceiver unit, configured to communicate with each forwarding device applied to the system in which control and forwarding are separated, wherein the communicating comprises:
sending, according to a network transaction, an operation set package comprising at least one operation instruction to at least two of the forwarding devices, wherein the operation set package comprises: an atomic operation identifier used to uniquely identify the network transaction;
receiving an execution status message fed back by each of the forwarding devices, wherein the execution status message comprises: the atomic operation identifier and an operation result of each of the operation instructions executed by each of the forwarding devices; and
when an operation result determining unit determines, according to each of the execution status messages, that an operation result of any one of the operation instructions executed by any one of the forwarding devices is: execution failed, further separately sending a rollback control instruction comprising forwarding devices for which no execution failure has been determined, so as to instruct each of the forwarding devices for which no execution failure has been determined, to restore to a state that is prior to execution of each of the operation instructions in the operation set package; and
the operation result determining unit, configured to determine, according to each of the execution status messages, the operation result of each of the operation instructions executed by each of the forwarding devices.

9. The network controller according to claim 8, further comprising:
a timing unit, wherein the timing unit is configured to start a timer after the transceiver unit sends the operation set package; and
the operation result determining unit is specifically configured to: when the timer started by the timing unit expires, if the transceiver unit has been not received an execution status message sent by one of the forwarding devices, determine that the operation result of the operation instruction executed by the forwarding device that has not fed back an execution status message is: execution failed.

10. The network controller according to claim 8, wherein:
the operation result determining unit is specifically configured to determine, according to an execution failure status message carried in the execution status message, that the operation result of the operation instruction executed by the forwarding device that has fed back the execution status message is: execution failed.

11. The network controller according to claim 8, wherein:
the transceiver unit is further configured to: when the operation result determining unit determines that the operation result of any one of the operation instructions executed by any one of the forwarding devices is: execution failed, send the rollback control instruction to each of the forwarding devices for which an execution failure is determined.

12. The network controller according to any one of claims 8 to 11, further comprising:
a transaction converting unit, configured to: before the transceiver unit communicates with each forwarding device, receive the network transaction from a service system, and convert the network transaction into the operation set package.

13. A forwarding device, wherein the forwarding device is applied in a system in which control and forwarding are separated, and comprises:
a transceiver unit, configured to communicate with a network controller applied to the system in which control and forwarding are separated, wherein:
the communicating comprises: receiving an operation set package sent by the network controller, and sending an execution status message to the network controller after a status message determining unit determines the execution status message, wherein:
the operation set package comprises: an atomic operation identifier and at least one operation instruction, the atomic operation identifier is used to uniquely identify one network transaction, the network transaction is corresponding to at least one operation set package, and the execution status message comprises: the atomic operation identifier and an operation result of the operation instruction executed by the executing unit;
the executing unit, configured to execute the operation instruction;
the status message determining unit, configured to determine the execution status message according to a situation of execution of the operation instruction by the executing unit; and
a status restoring unit, configured to: if execution of any one of the operation instructions fails, restore to a state that is prior to execution of each of the operation instructions in the operation set package.

14. The forwarding device according to claim 13, wherein:
the transceiver unit is further configured to: when the executing unit fails to execute any one of the operation instructions, receive a rollback control instruction delivered by the network controller;
the status restoring unit is specifically configured to: according to the rollback control instruction delivered by the network controller, restore to the state that is prior to execution of each of the operation instructions in the operation set package; and
the rollback control instruction comprises the atomic operation identifier.

15. The forwarding device according to claim 13, wherein:
the status restoring unit is specifically configured to: when the executing unit fails to execute any one of the operation instructions, proactively execute a rollback operation to restore to the state that is prior to execution of each of the operation instructions in the operation set package.
